# EUROPÄISCHE PATENTSCHRIFT

(11) **EP 2 514 292 B1**
(45) Veröffentlichungstag und Bekanntmachung des Hinweises auf die Patenterteilung: **18.06.2014**
(21) Anmeldenummer: 12002614.1
(22) Anmeldetag: 13.04.2012
(51) Int. Cl.: A01C 7/08, A01C 7/06

(54) **Reihensämaschine**
Row sowing machine
Semoir

(30) Priorität: 21.04.2011 DE 102011018447
(43) Veröffentlichungstag der Anmeldung: 24.10.2012
(73) Patentinhaber: Alois Pöttinger Maschinenfabrik Ges.m.b.H., 4710 Grieskirchen (AT)
(72) Erfinder: Preimess, Hans-Jörg, 9811 Lendorf (AT)
(74) Vertreter: Thoma, Michael

(56) Entgegenhaltungen:
- WO-A1-2009/129982
- AU-B2- 424 504
- DE-A1- 19 712 430
- DE-U1- 8 536 797
- FR-A1- 2 333 431
- US-A- 4 779 765

## Beschreibung

Die vorliegende Erfindung betrifft eine Reihensämaschine umfassend zumindest eine Reihe von Ausbringelementen, vorzugsweise in Form von Säscharen, von denen zumindest einigen von einem Speicherraum her auszubringendes Gut zuführbar ist, wobei der genannte Speicherraum über zumindest eine Speiseleitung mit zumindest einem Verteilerkopf verbunden ist, von dem aus Verteilerleitungen zu den Ausbringelementen führen.

Mit derartigen Reihensä- oder Drillmaschinen kann Saatgut in definierten Reihen, die voneinander beabstandet sind, ausgebracht werden, wobei eine Unterflurausbringung des Saatguts erfolgen kann. Hierzu können die in Reihen angeordneten Ausbringelemente Scharelemente beispielsweise in Form von Scharscheiben umfassen, die eine Säfurche in den Boden einbringen, in der das Saatgut dann abgelegt wird. Typischerweise können derartige Reihensämaschinen den Ausbringelementen vorgeschaltete oder nachgeschaltete Bodenbearbeitungsaggregate wie Auflockerungselemente, die üblicherweise vorauslaufend angeordnet werden, oder Walzelemente und Zustreicher aufweisen, die üblicherweise nachlaufend angeordnet werden.

Das auszubringende Gut wird hierbei aus dem Speicherraum zunächst in einen Verteilerkopf geführt, in dem sich das auszubringende Gut verteilt und über eine Vielzahl von Verteilerleitungen den Ausbringelementen zugeführt wird. Hierbei kann mit einem Luftstromförderer gearbeitet werden, der das auszubringende Gut von dem Speicherraum in den Verteilerraum fördert und/oder von dem Verteilerraum zu den Ausbringelementen fördert. Oftmals wird das Gut aus dem Speicherraum pneumatisch von unten her zentral in den Verteilerkopf geblasen bzw. gefördert, um in dem Verteilerkopf ebenfalls durch den Luftstrom unterstützt die gewünschte Kornverteilung auf die verschiedenen Verteilerleitungen zu erreichen.

Derartige Reihensämaschinen sind beispielsweise aus den Schriften EP 13 42 400 B1, WO 03/071856 A1 oder DE 10 2007 024 464 A1 bekannt.

Üblicherweise wird mit derartigen Reihensämaschinen Getreidesaatgut wie Weizen oder Hafer ausgebracht. Es wird jedoch auch gewünscht, mit solchen pneumatischen Reihensämaschinen auch Reihenkulturen wie Mais, Sonnenblumen und Soja auszubringen, um für dieses spezielle Saatgut keine zusätzlichen Spezialmaschinen kaufen zu müssen. Hierbei sollen nicht nur große Reihenabstände beispielsweise im Bereich von 60 bis 75 cm, sondern auch Engreihensaaten mit Reihenabständen von beispielsweise 37,5 bis 50 cm realisiert werden können. Die genannten Engreihensaaten ergeben gerade im Häckselsilagebereich höhere Erträge, geringeren Unkrautdruck und geringeres Erosionsrisiko.

Allerdings wird bei Verwendung herkömmlicher Drillmaschinen bei der Aussaat von Mais, Sonnenblumen und Soja in Drillsaat eine nur unbefriedigende Längsverteilung der Saatgutkörner in den Reihen erzielt. Einerseits kann es zu Mehrfachbelegungen kommen, andererseits entstehen auch wiederum zu große Lücken, da über die pneumatische Drillsaat die Ablegeabstände nicht exakt gesteuert werden können. Für Anwendungen, bei denen solche Unzulänglichkeiten der Längsverteilung nicht akzeptabel sind, wurden daher bislang Einzelkornsämaschinen verwendet, die die auszubringenden Körner in einem vorgebbaren Takt vereinzeln und daher in einem besser steuerbaren Abstand ablegen können. Derartige Einzelkornsämaschinen sind beispielsweise aus den Schriften DE 10 2008 007 614 A1 oder EP 22 10 464 A1 bekannt.

Aus den Schriften WO 2009/129982 A1 und DE 197 12 430 A1 sind jeweils pneumatische Drillsaatmaschinen bekannt, die zwei separate Speicherbehälter aufweisen, um Saatgut und Dünger gleichzeitig auszubringen, wobei jeder der Speicherbehälter über ein zentrales Steigrohr mit einem pneumatischen Verteilerkopf verbunden ist, von dem das Saatgut bzw. der Dünger über eine Vielzahl von Verteilerleitungen zu den Ausbringelementen gebraucht wird. Ferner ist aus der Schrift DE 85 36 797 eine Einzelkornsämaschine bekannt, bei der zusätzlich zur Einzelkornablage Dünger ausgebracht werden kann.

Der vorliegenden Erfindung liegt die Aufgabe zugrunde, eine verbesserte Reihensämaschine der eingangs genannten Art zu schaffen, die Nachteile des Standes der Technik vermeidet und Letzteren in vorteilhafter Weise weiterbildet. Insbesondere soll eine Reihensämaschine geschaffen werden, die gleichermaßen das Ausbringen von klassischem Drillsaatgut mit engsten Reihenabständen und hohen Ausbringleistungen als auch das Ausbringen von Mais, Sonnenblumen und Soja mit hochwertiger Längsverteilung der Körner ermöglicht.

Erfindungsgemäß wird diese Aufgabe durch eine Reihensämaschine gemäß Anspruch 1 gelöst. Bevorzugte Ausgestaltungen der Erfindung sind Gegenstand der abhängigen Ansprüche.

Es wird also vorgeschlagen, an einer Reihensämaschine verschiedene Kornausbringungen, insbesondere in Drillsaat und Einzelkornsaat, miteinander zu kombinieren. Über verschiedene Zuführ- bzw. Ausbringsysteme können wahlweise Güter wie Mais, Sonnenblumen oder Soja in definierter Längsverteilung zusammen mit Dünger ausgebracht werden oder auch über nur ein Ausbringsystem andere Güter wie Weizen oder Hafer ausgebracht werden. Insbesondere kann die kombinierte Ausbringung von Dünger und Saatgut vorgesehen werden, wobei das Saatgut vereinzelt wird und der Dünger durch Einsätze in den Verteilerkopf nur an den unmittelbar neben den Saatgutreihen benachbarten Reihen ausgebracht wird. Erfindungsgemäß besitzt die Reihensämaschine zusätzlich zu dem mit dem Verteilerkopf verbundenen Speicherraum, einen, weiteren, separaten Speicherraum, der über Zufuhrleitungen mit zumindest einigen der Ausbringelementen verbunden ist, so dass an zumindest einigen und/oder benachbarten Ausbringelementen wahlweise nacheinander oder gleichzeitig unterschiedliche Güter aus separaten Speicherräumen ausbringbar sind. Insbesondere kann aus dem mit dem Verteilerkopf verbundenen Speicherraum Dünger ausgebracht werden, während aus dem zusätzlichen, separaten Speicherraum Saatgut wie Mais, Soja oder Sonnenblumen ausgebracht wird, wobei vorteilhafterweise Dünger- und Saatgutaustrag gleichzeitig erfolgen kann. Soll andererseits bezüglich der Längsverteilung unkritisches Saatgut wie Getreide beispielsweise in Form von Weizen ausgebracht werden, kann dies über den mit dem Verteilerkopf verbundenen Speicherraum in Drillsaat erfolgen, der bei der Ausbringung von Mais, Soja oder Sonnenblumen für den Dünger genutzt wird. Hierdurch kann auf separate Sämaschinen für die verschiedenen Saatgüter verzichtet werden. Gleichzeitig wird eine kombinierte Ausbringung von Dünger und Saatgut ermöglicht. Wenn nur Drillsaat ausgeführt wird, kann durch Umlegen oder Entfernen von Trennwänden der Speicherraum von Einzelkornsaatgut (Mais, Soja, Sonnenblumen) zusätzlich genutzt werden.

Erfindungsgemäß ist für die Ausbringung des Guts aus dem zusätzlichen Speicherraum eine Kornvereinzelungsvorrichtung vorgesehen, die die auszubringenden Körner vereinzelt und in definierter Längsverteilung ablegt. Diese Kornvereinzelungsvorrichtung kann grundsätzlich verschieden ausgebildet, sein, wobei die Kornvereinzelungsvorrichtung unmittelbar an dem genannten zusätzlichen Speicherraum vorgesehen ist, beispielsweise im Bereich der Anschlüsse der zu den Ausbringelementen führenden Zufuhrleitungen.

Vorteilhafterweise kann die Kornvereinzelungsvorrichtung in den zusätzlichen Speicherraum integriert sein. Durch eine zentrale, dem zusätzlichen Speicherraum zugeordnete Kornvereinzelungsvorrichtung wird nicht nur eine einfache Ansteuerung erreicht, sondern vor allen Dingen auch an den Ausbringelementen Platz geschaffen, so dass im Bereich der Ausbringelemente genügend Platz verbleibt, um in sehr engem Abstand zueinander die Austrittsabschnitte der vom Verteilerkopf her kommenden Leitungen und der vom zusätzlichen Speicherraum her kommenden Leitungen anzubringen, ohne dass es hier zu Kollisionen käme oder zu große Abstände einzuhalten wären. Dies ist insbesondere für die gleichzeitige Ausbringung von Dünger und Saatgut vorteilhaft, da hierdurch der Dünger unmittelbar dort in den Boden eingebracht werden kann, wo das Saatgut abgelegt wird.

Die genannte Kornvereinzelungsvorrichtung kann in Weiterbildung der Erfindung eine vorzugsweise antreibbare Vereinzelungswelle aufweisen, die den Anschlüssen der Zufuhrleitungen an den zusätzlichen Speicherraum zugeordnet sind, beispielsweise unmittelbar vor diesem angeordnet ist. Die genannte Kornvereinzelungswelle kann beispielsweise schneckenförmige Zufuhrelemente aufweisen oder Vereinzelungsbohrungen besitzen, so dass je nach Drehstellung ein einzelnes Korn in die vom zusätzlichen Speicherraum wegführende Zufuhrleitung gegeben wird.

Die Anzahl der mit dem zusätzlichen Speicherraum verbundenen Ausbringelementen und die Anzahl der mit dem Verteilerkopf verbundenen Ausbringelemente können variieren, wobei insbesondere mehr Ausbringelemente mit dem Verteilerkopf verbunden sein können als mit dem zusätzlichen Speicherraum verbunden sind.

Die mit dem zusätzlichen Speicherraum verbundenen Ausbringelemente können gleichzeitig auch mit dem Verteilerkopf verbunden sein, so dass sowohl vom Verteilerkopf her Dünger als auch vom zusätzlichen Speicherraum her Saatgutkörner am selben Ausbringelement ausgebracht werden können. Alternativ oder zusätzlich kann jedoch auch vorgesehen sein, dass für die Ausbringung des Saatguts aus dem zusätzlichen Speicherraum zumindest einige separate Ausbringelemente vorgesehen sind, die nicht mit dem Verteilerkopf verbunden sind bzw. von diesem her nicht bedient werden können. Um Dünger in unmittelbarer Nähe der dort abgelegten Saatgutkörner auszubringen zu können, können unmittelbar benachbarte Ausbringelemente mit dem genannten Verteilerkopf verbunden sein bzw. von diesem her bedient werden.

Um die Saatgutausbringung über den Verteilerkopf variabel an die verschiedenen Anwendungsfälle anpassen zu können, kann dem Verteilerkopf in Weiterbildung der Erfindung eine Absperrvorrichtung zur Absperrung zumindest einer Verteilerleitung zugeordnet sein, die zu einem von dem zusätzlichen Speicherraum her unbedienten Ausbringelement führt bzw. zu einem Ausbringelement führt, das nicht mit einem vom zusätzlichen Speicherraum her bedienten Ausbringelement benachbart ist. Durch eine solche Absperrvorrichtung können insbesondere all die Ausbringelemente gesperrt werden, die nicht benötigt werden, wenn über den Verteilerkopf Dünger und über den zusätzlichen Speicherraum Saatgut wie Mais, Soja oder Sonnenblumen ausgebracht werden. Alternativ oder zusätzlich kann die wahlweise Absperrung zumindest einiger Verteilerleitungen auch dazu genutzt werden, im reinen Drillsaatbetrieb einige Ausbringelemente abzusperren, beispielsweise um die Reihenabstände zu vergrößern oder Fahrgassen einzubringen.

Die Absperrvorrichtung ist hierbei vorteilhafterweise zwischen einem absperrenden und einem freigebenden Zustand schaltbar ausgebildet. Hierzu können insbesondere zumindest abschnittsweise bewegbare Absperrelemente Verwendung finden, beispielsweise in Form von Absperrschiebern, Absperrklappen oder dergleichen.

Vorteilhafterweise kann die Absperrvorrichtung in den Verteilerkopf bewegbare und aus dem Verteilerkopf herausbewegbare Blockierelemente vorzugsweise in Form von Ablenkkeilen umfassen, die vor die abzusperrenden Verteilerleitungen in den Verteilerkopf gesetzt werden können: Solche Umlenkkeile bzw. Ablenkkeile leiten insbesondere bei pneumatisch arbeitenden Verteilerköpfen den Luftstrom gleichmäßig ab, so dass Unregelmäßigkeiten in der Verteilung über die noch offen bleibenden Verteilerleitungen vermieden werden können.

In Weiterbildung der Erfindung besitzen die von dem zusätzlichen Speicherraum zu den Ausbringelementen führenden Zufuhrleitungen und die vom Verteilerkopf zu den Ausbringelementen führenden Verteilerleitungen separate Mündungsabschnitte und/oder separate Ablegeteile, die beispielsweise rechts und links an derselben Scharscheibe angeordnet oder separaten, vorzugsweise nebeneinander liegenden, Scharscheiben angeordnet sein können.

Um eine gleichmäßig, effiziente und von äußeren Einflüssen wie Hangneigung, fahrdynamischen Stößen und dergleichen unbeeinträchtigte Gutförderung zu erreichen, kann in Weiterbildung der Erfindung eine Luftstromfördervorrichtung zur Förderung der auszubringenden Güter vorgesehen sein. Insbesondere kann eine solche pneumatische Fördervorrichtung nicht nur dem Ausbringsystem, das mit dem genannten Verteilerkopf arbeitet, zugeordnet sein, sondern auch für das Ausbringsystem vorgesehen sein, das von dem separaten zusätzlichen Speicherraum das dort gespeicherte Gut über die Zufuhrleitungen zu den Ausbringelementen ausbringt. Insbesondere kann das auszubringende Gut in den vom zusätzlichen Speicherraum zu den jeweiligen Ausbringelementen führenden Zufuhrleitungen dort im Luftstrom bzw. pneumatisch gefördert werden.

Die vorliegende Erfindung wird nachfolgend anhand eines bevorzugten Ausführungsbeispiels und zugehöriger Zeichnungen näher erläutert. In den Zeichnungen zeigen:

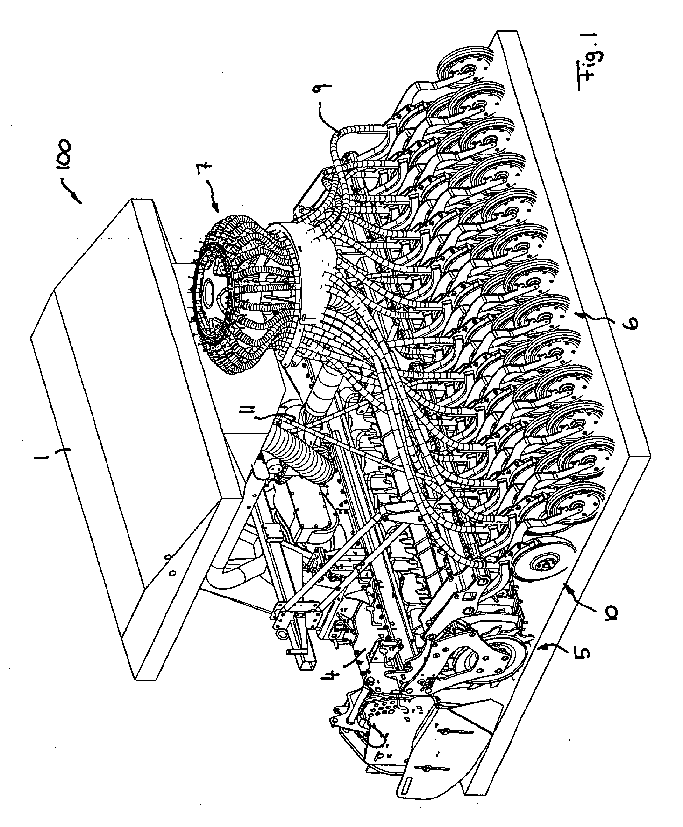

- Fig. 1:: eine schematische, perspektivische Darstellung einer Reihensämaschine nach einer vorteilhaften Ausführung der Erfindung, wobei mehrere Reihen von Säscharen gezeigt sind, die von einem Verteilerkopf her beschickbar sind und teilweise von einem separaten Speicherraum her beschickbar sind,
- Fig. 2:: eine Seitenansicht der Reihensämaschine aus Fig. 1, die die Anordnung des Verteilerkopfes und dessen Anbindung einerseits an den Speicherraum und andererseits an die Säschare zeigt, sowie weiterhin zeigt, dass einige der Säschare über separate Zufuhrleitungen an dem Verteilerkopf vorbei von einem separaten Speicherraum des Saatguttanks her beschickbar sind, und
- Fig. 3:: eine Draufsicht auf die Reihensämaschine aus Fig. 1, die die Verteilung der Säschare und deren Anbindung an den Verteilerkopf bzw. den separaten Speicherraum zeigt.

Wie in den Figuren gezeigt, kann die Reihensämaschine 100 als Anbaugerät ausgeführt sein, das in an sich bekannter Weise über einen Anbaubock 16 in an sich bekannter Weise beispielsweise mittels einer Dreipunktanlenkung an einen nicht gezeigten Schlepper anbaubar ist. Die Reihensämaschine 100 kann einen mehrgliedrigen Maschinenrahmen 17 umfassen, der einerseits einen Tank 1 zur Speicherung von Saatgut oder anderem auszubringendem Gut wie Dünger trägt und andererseits der Aufhängung diverser Bodenbearbeitungsaggregate dient. Wie die gezeichnete Ausführung zeigt, können zusätzlich zu den Ausbringelementen 10, über die das auszubringende Gut am Boden abgelegt wird, vorauslaufende Bodenaggregate 5 beispielsweise in Form eines Grubbers, einer Scheibenegge oder anderer den Boden vorbereitender Bodenbearbeitungswerkzeuge und/oder nachlaufende Bodenbearbeitungsaggregate 6 beispielsweise in Form von Andruckwalzen, Zustreichern oder dergleichen vorgesehen sein.

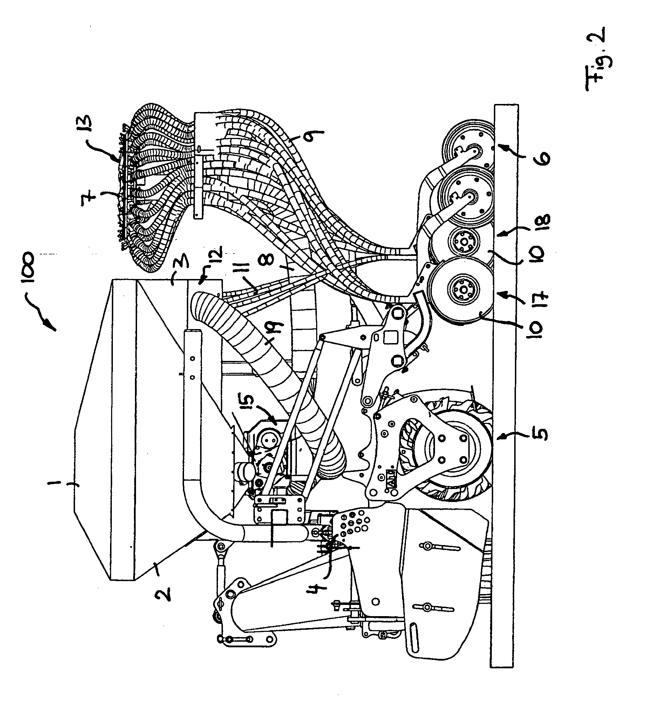

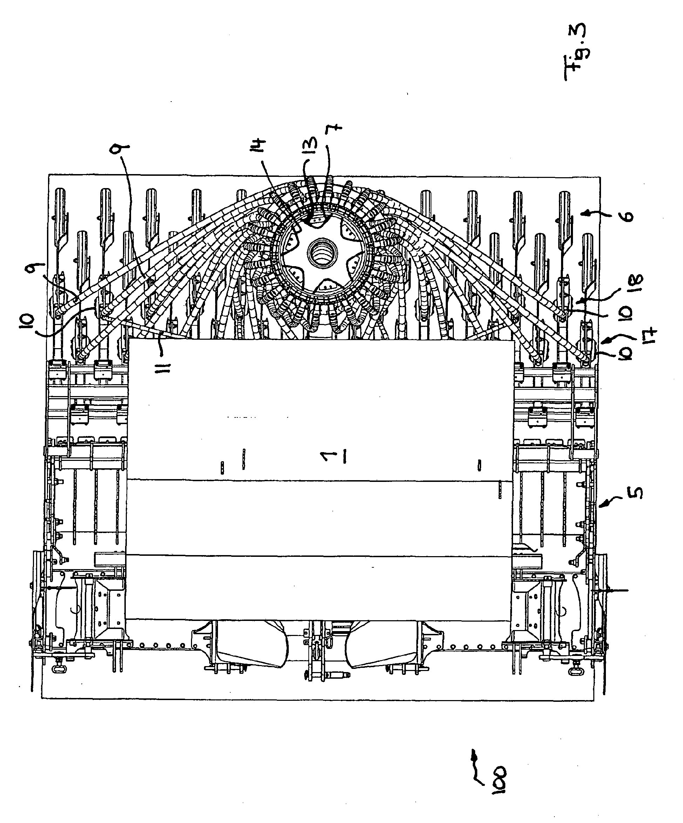

Die genannten Ausbringelemente 10 können als Säschare beispielsweise in Form von Scheibenscharen ausgebildet sein, die um liegende Querachsen drehbare Scheiben umfassen, mittels derer eine Ablagefurche in den Boden gezogen wird. Die genannten Ausbringelemente 10 können in zumindest einer Reihe quer zur Fahrtrichtung voneinander beabstandet angeordnet sein, wobei in der gezeichneten Ausführungsform zwei Reihen 17 und 18 von Ausbringelementen 10 vorgesehen sind. In alternativer Ausbildung der Erfindung könnten auch mehr als zwei Reihen von Ausbringelementen vorgesehen sein. Die genannten Reihen 17 und 18 sind hierbei in Fahrtrichtung hintereinander versetzt angeordnet, vgl. Fig. 2, wobei die in verschiedenen Reihen 17 und 18 vorgesehenen Ausbringelemente 10 auch quer zur Fahrtrichtung spurversetzt angeordnet sind, vgl. Fig. 3, so dass ein Säschar in der vorderen Reihe eine Saatfurche benachbart zu der von einem Säschar der hinteren Reihe gezogenen Saatfurche liegt. Diesbezüglich sind jedoch auch andere Ausführungen und Gruppierungen mit anderem Versatz zueinander möglich.

Die genannten Ausbringelemente 10 werden von einem Verteilerkopf 7 her mit auszubringendem Gut beschickt, wobei der genannte Verteilerkopf 7 über eine Vielzahl von Verteilerleitungen 9 mit den Ausbringelementen 10 verbunden ist. Die genannten Verteilerleitungen 9 münden an den Ausbringelementen 10 in Form von Särohrstutzen oder anderen Ausbringelementen, um das auszubringende Gut in die von dem Säschar gezogene Saatfurche abzulegen.

Die genannten Verteilerleitungen 9 gehen von dem Verteilerraum des Verteilerkopfes 7 ab, über dessen Umfang die Anschlüsse der Verteilerleitungen 9 verteilt angeordnet sind, vgl. Fig. 3.

Der genannte Verteilerkopf 7 wird wiederum von einem Speicherraum 2 des Tanks 1 her über eine Speiseleitung 8 mit auszubringendem Gut beschickt, wobei die genannte Speiseleitung 8 zentral von unten her in den Verteilerraum des Verteilerkopfes 7 führen kann. Die Beschickung erfolgt hierbei vorteilhafterweise mit Hilfe einer pneumatischen Fördereinrichtung 15, die das auszubringende Gut im Luftstrom in den Verteilerkopf 7 hineinfördert, dort verteilt und sodann über die Verteilerleitungen 9 zu den Ausbringelementen 10 treibt.

Wie die Figuren zeigen, können einige der Ausbringelemente 10 an dem Verteilerkopf 7 vorbei von einem separaten, zusätzlichen Speicherraum 3 her mit auszubringendem Gut beschickt werden. Der genannte zusätzliche Speicherraum 3 kann separat von dem vorgenannten ersten Speicherraum 2 ausgebildet und zusammen mit diesem in den Tank 1 integriert sein, wobei es jedoch auch möglich wäre, den zusätzlichen Speicherraum 3 gänzlich separat vom Tank 1 auszubilden. Bevorzugt ist jedoch die Anordnung der beiden separaten Speicherräume 2 und 3 in einem gemeinsamen Tank 1.

Der separate Speicherraum 3 ist über Zufuhrleitungen 11 direkt, d.h. an dem Verteilerkopf 7 vorbei mit einigen der Ausbringelemente 10 verbunden, wobei die entsprechenden Ausbringelemente 10 gleichmäßig voneinander beabstandet sein können und beispielsweise in der hinteren Reihe 18 vorgesehen sein können. Die vom separaten Speicherraum 3 her beschickbaren Ausbringelemente 10 besitzen einen deutlich größeren Reihenabstand als die über den Verteilerkopf 7 her beschickbaren Ausbringelemente 10. Beispielsweise können die Zufuhrleitungen 11, die vom zusätzlichen Speicherraum 3 her kommen, an jedem dritten Ausbringelement 10 einer Reihe münden, wobei jedoch je nach gewünschtem Reihenabstand der vom zusätzlichen Speicherraum 3 her vorgenommenen Aussaat auch andere Gruppierungen vorgesehen sein können.

Die genannten Ausbringelemente 10, die vom zusätzlichen Speicherraum 3 her über die Zufuhrleitungen 11 beschickbar sind, können andererseits auch von dem Verteilerkopf 7 her beschickt werden, d.h. an den jeweiligen Ausbringelementen 10 münden einerseits die Zufuhrleitungen 11 vom zusätzlichen Speicherraum 3 her und andererseits die entsprechende Verteilerleitung 9 vom Verteilerkopf 7 her, vgl. Fig. 3. Je nachdem, in welchem Ausbringmodus gearbeitet wird, kann jeweils die entsprechende Zufuhrleitung 11 oder die entsprechende Verteilerleitung 9 abgeschaltet werden.

Die Ausbringung des Gut vom zusätzlichen Speicherraum 3 kann vorteilhafterweise ebenfalls mit Hilfe der pneumatischen Fördereinrichtung 15 erfolgen, die über zumindest eine Luftzufuhrleitung 19 einen Luftstrom in den zusätzlichen Speicherraum 3 fördern kann, der sodann über die Zufuhrleitungen 11 entweichen kann, um die Körner zu den Ausbringelementen 10 mitzunehmen.

Der Körneraustrag aus dem zusätzlichen Speicherraum 3 kann durch eine Kornvereinzelungsvorrichtung 12 exakt gesteuert bzw. dosiert werden. Die genannte Körnerverteilungsvorrichtung 12 kann hierzu vorteilhafterweise in den zusätzlichen Speicherraum 3 integriert sein, beispielsweise eine antreibbare Körnervereinzelungswelle umfassen, die sich über die Anschlüsse der Zufuhrleitungen 11 an den zusätzlichen Speicherraum 3 erstreckt und/oder diesen vorgeschaltet ist, um jeweils in einem gewünschten Takt Körner einzeln in die genannten Zufuhrleitungen 11 einzubringen.

Wie Fig. 2 zeigt, können die Zufuhrleitungen 11 in ihrem Durchmesser an die Einzelkornaussaat angepasst sein, wobei die genannten Zufuhrleitungen 11 insbesondere von ihrem Durchmesser her kleiner dimensioniert sein können als die vom Verteilerkopf 7 her kommenden Verteilerleitungen 9.

Die Reihensämaschine 100 erlaubt es, auszubringendes Gut in verschiedenen Ausbringmodi auszubringen: Zum einen kann in einem ersten Ausbringmodus beispielsweise Getreidesaat nur über den Verteilerkopf 7 ausgebracht werden. In diesem Drillsaatmodus ist die Körnervereinzelungsvorrichtung 12 abgeschaltet, so dass aus dem zusätzlichen Speicherraum 3 kein Gut ausgetragen wird. Im Verteilerkopf 7 sind alle Verteilerleitungen 9 freigeschaltet, so dass auch an den Ausbringelementen 10, an denen die Zufuhrleitungen 11 vom zusätzlichen Speicherraum 3 her münden, Gut über den Verteilerkopf 7 her ausgebracht werden kann. Es müssen natürlich nicht zwangsweise alle Verteilerleitungen 9 freigeschaltet sein. Beispielsweise um Fahrgassen einzubringen oder größere Reihenabstände zu erreichen oder nur eine halbe Arbeitsbreite der Sämaschine zu nutzen, können auch im Drillsaatmodus einzelne oder mehrere der Verteilerleitungen 9 gesperrt sein. Hierzu wird eine vorzugsweise in den Verteilerkopf 7 integrierte Absperrvorrichtung in ihre sperrende Stellung geschaltet, wobei die genannte Absperrvorrichtung 13 entsprechende Blockierelemente 14 beispielsweise in Form von Ablenkkeilen umfassen kann, wie sie beispielsweise per se aus der Schrift DE 10 2007 024 464 A1 bekannt sind.

Andererseits kann in einem Einzelkornsaat-/Düngemodus eine Einzelkornablage in Kombination mit einer Unterflurdüngung erreicht werden. Hierzu wird einerseits geeignetes Saatgut wie beispielsweise Mais, Sonnenblumen oder Soja aus dem zusätzlichen Speicherraum 3 über die daran angeschlossenen Ausbringelemente 10 ausgebracht, wobei hier durch Betrieb der Kornvereinzelungsvorrichtung 12 im Einzelkorn-Ablagebetrieb gearbeitet wird. Zusätzlich zum Inbetriebsetzen der Kornvereinzelungsvorrichtung 12 werden im Verteilerkopf 7 die Verteilerleitungen 9 gesperrt, die für das Ausbringen von Dünger nicht benötigt werden. Dies können einerseits die Verteilerleitungen 9 sein, die an den Ausbringelementen 10 münden, an welchen auch die Zufuhrleitungen 11 vom zusätzlichen Speicherraum 3 her münden. Zum anderen können Verteilerleitungen 9 gesperrt werden, die zu Ausbringelemente 10 führen, welche nicht unmittelbar benachbart zu den für die Einzelkornablage benutzten Ausbringelementen 10 sind oder von Letzteren zu weit beabstandet sind, da vorteilhafterweise die Ausbringung des Düngers in der Nähe der Einzelkornablage, insbesondere in benachbarten Aussaatfurchen erfolgt. Zur Sperrung der nicht benötigten bzw. nicht gewünschten Verteilerleitungen 9 können wiederum in der vorgenannten Weise entsprechende Blockierelemente 14 im Verteilerkopf 7 eingebracht bzw. aktiviert werden.

Weiterhin wäre es auch möglich, die Reihensämaschine 100 in einem reinen Einzelkorn-Ablagemodus zu betreiben, d.h. auf die Ausbringung des Düngers über den Verteilerkopf 7 gänzlich zu verzichten.

## Patentansprüche

1. Reihensämaschine umfassend zumindest eine Reihe von Ausbringelementen (10), vorzugsweise in Form von Säscharen, von denen zumindest einigen von einem Speicherraum (2) her auszubringendes Gut zuführbar ist, wobei der Speicherraum (2) über zumindest eine Speiseleitung (8) mit zumindest einem Verteilerkopf (7) verbunden ist, von dem aus Verteilerleitungen (9) zu den Ausbringelementen (10) führen, wobei ein zusätzlicher, separater Speicherraum (3) vorgesehen ist, der über Zufuhrleitungen (11) mit zumindest einigen der Reihe von Ausbringelementen (10) verbunden ist, so dass an zumindest einigen und/oder benachbarten Ausbringelementen wahlweise nacheinander oder gleichzeitig Güter aus separaten Speicherräumen (2, 3) ausbringbar sind, **dadurch gekennzeichnet, dass** eine zentrale Körnervereinzelungsvorrichtung (12) zur Vereinzelung der aus dem zusätzlichen separaten Speicherraum (3) auszubringenden Körner unmittelbar an dem zusätzlichen separaten Speicherraum (3) vorgesehen ist.

2. Reihensämaschine nach dem vorhergehenden Anspruch, wobei die Körnervereinzelungsvorrichtung (12) in dem zusätzlichen separaten Speicherraum (3) integriert ist.

3. Reihensämaschine nach einem der beiden vorhergehenden Ansprüche, wobei die Kornvereinzelungsvorrichtung (12) eine den Anschlüssen der Zufuhrleitungen (11) an den zusätzlichen separaten Speicherraum (3) zugeordnete, vorzugsweise antreibbare, Vereinzelungswelle aufweist.

4. Reihensämaschine nach einem der vorhergehenden Ansprüche, wobei zumindest einem Ausbringelement (10) nur von dem Verteilerkopf (7) her auszubringendes Gut zuführbar ist und/oder mehr Ausbringelemente (10) mit dem Verteilerkopf verbunden sind als mit dem zusätzlichen separaten Speicherraum (3) verbunden sind.

5. Reihensämaschine nach einem der vorhergehenden Ansprüche, wobei dem Verteilerkopf (7) eine zwischen absperrendem und freigebendem Zustand schaltbare Absperrvorrichtung (13) zur Absperrung zumindest einer Verteilerleitung (9), die zu einem von dem zusätzlichen separaten Speicherraum (3) her unbedienten Ausbringelement und/oder einem Ausbringelement, das mit den vom zusätzlichen Speicherraum (3) her bedienten Ausbringelementen nicht benachbart ist, führt, vorgesehen ist.

6. Reihensämaschine nach dem vorhergehenden Anspruch, wobei die Absperrvorrichtung (13) in den Verteilerkopf (7) bewegbare und aus dem Verteilerkopf (7) herausbewegbare Blockierelemente (14), vorzugsweise in Form von Ablenkkeilen, umfasst.

7. Reihensämaschine nach einem der vorhergehenden Ansprüche, wobei die von dem zusätzlichen separaten Speicherraum (3) zu den zugehörigen Ausbringelementen (10) führenden Zufuhrleitungen (11) und die vom Verteilerkopf (7) zu den zugehörigen Ausbringelementen (10) führenden Verteilerleitungen (9) separate Mündungs- und/oder Ablegeabschnitte aufweisen, die auf gegenüberliegenden Seiten desselben Ausbringelements oder an unterschiedlichen, vorzugsweise benachbarten Ausbringelementen angeordnet sind.

8. Reihensämaschine nach einem der vorhergehenden Ansprüche, wobei den Zufuhrleitungen (11), die von dem zusätzlichen Speicherraum (7) zu den zugehörigen Ausbringelementen (10) führen, eine pneumatische Fördereinrichtung zur Förderung der auszubringenden Güter im Luftstrom zugeordnet ist.

9. Reihensämaschine nach einem der vorhergehenden Ansprüche, wobei den Verteilerleitungen (9), die von dem Verteilerkopf (7) zu den zugehörigen Ausbringelementen (10) führen, die genannte oder eine andere pneumatische Fördervorrichtung (15) zur Förderung der auszubringenden Güter im Luftstrom zugeordnet ist.

10. Reihensämaschine nach einem der vorhergehenden Ansprüche, wobei der zusätzliche separate Speicherraum (3) als Saatkornspeicher vorzugsweise für Mais-, Sonnenblumen- und/oder Sojasaatgutkörner, ausgebildet ist und der mit dem Verteilerkopf (7) verbundene Speicherraum (2) als Düngerspeicher, vorzugsweise als Dünger- und Getreidesaatgutspeicher, ausgebildet ist.

11. Reihensämaschine nach einem der vorhergehenden Ansprüche, wobei der zusätzliche separate Speicherraum (3) und der Speicherraum (2) durch Entfernen und/oder Umlegen einer Trennwand miteinander verbindbar sind derart, dass zum Drillen von normalem Saatgut wie Weizen oder Hafer durch Umlegen oder Entfernen der Trennwände der zusätzliche Speicherraum der Vereinzelungsaggregate zusätzlich für die Drillsaat nutzbar ist.

## Claims

1. A row sowing machine comprising at least one row of application elements (10), preferably in the form of sowing coulters, to at least some of which stock to be applied can be supplied from a storage space (2), wherein the storage space (2) is connected with at least one distributor head (7) via at least one feed line (8), from which distributor head distributor lines (9) lead to the application elements (10), wherein an additional, separate storage space (3) is provided, which via supply lines (11) is connected with at least some of the row of application elements (10), so that on at least some and/or adjacent application elements stocks can be applied from the separate storage spaces (2, 3) selectively one after the other or at the same time, **characterized in that** a central grain singling device (12) for singling the grains to be applied from the additional separate storage space (3) is provided directly at the additional separate storage space (3).

2. The row sowing machine according to the preceding claim, wherein the grain singling device (12) is integrated into the additional separate storage space (3).

3. The row sowing machine according to any of the two preceding claims, wherein the grain singling device (12) includes a preferably drivable singling shaft associated to the connections of the supply lines (11) to the additional separate storage space (3).

4. The row sowing machine according to any of the preceding claims, wherein to at least one application element (10) stock to be applied can be supplied only from the distributor head (7) and/or more application elements (10) are connected with the distributor head than with the additional separate storage space (3).

5. The row sowing machine according to any of the preceding claims, wherein for the distributor head (7) a shut-off device (13) switchable between a blocking and a clearing condition is provided for shutting off at least one distributor line (9) which leads to an application element not operated from the additional separate storage space (3) and/or to an application element which is not adjacent to the application elements operated from the additional storage space (3).

6. The row sowing machine according to the preceding claim, wherein the shut-off device (13) comprises blocking elements (14), preferably in the form of deflection wedges, which are movable into the distributor head (7) and movable out of the distributor head (7).

7. The row sowing machine according to any of the preceding claims, wherein the supply lines (11) leading from the additional separate storage space (3) to the associated application elements (10) and the distributor lines (9) leading from the distributor head (7) to the associated application elements (10) include separate orifice and/or deposition portions which are arranged on opposite sides of the same application elements or on different, preferably adjacent application elements.

8. The row sowing machine according to any of the preceding claims, wherein to the supply lines (11), which lead from the additional storage space (7) to the associated application elements (10), a pneumatic conveying means is associated for conveying the stocks to be applied in the air stream.

9. The row sowing machine according to any of the preceding claims, wherein to the distributor lines (9), which lead from the distributor head (7) to the associated application elements (10), the said or another pneumatic conveying device (15) is associated for conveying the stocks to be applied in the air stream.

10. The row sowing machine according to any of the preceding claims, wherein the additional separate storage space (3) is formed as seed grain store, preferably for corn, sunflower and/or soybean seed grains, and the storage space (2) connected with the distributor head (7) is formed as fertilizer store, preferably as fertilizer and cereal seed store.

11. The row sowing machine according to any of the preceding claims, wherein the additional separate storage space (3) and the storage space (2) are connectable with each other by removing and/or folding over a partition wall such that for drilling normal seed stock such as wheat or oat the additional storage space of the singling units additionally is usable for the drill seeds by folding over or removing the partition walls.

## Revendications

1. Semoir en lignes, comportant au moins une ligne d'éléments de distribution (10), de préférence sous la forme de socs semeurs, parmi lesquels au moins certains peuvent recevoir la matière à distribuer sortant d'une trémie (2), ladite trémie (2) étant reliée via au moins une conduite d'alimentation (8) à au moins une tête de distribution (7), à partir de laquelle des conduites de distribution (9) mènent vers les éléments de distribution (10), une trémie (3) séparée supplémentaire étant prévue et étant reliée via des conduites d'acheminement (11) à au moins quelques-unes des lignes d'éléments de distribution (10), de telle sorte que sur au moins certains éléments de distribution et/ou des éléments de distribution adjacents, il est possible de distribuer au choix, successivement ou simultanément, des matières sortant des trémies (2, 3) séparées, **caractérisé en ce que** directement sur la trémie (3) séparée supplémentaire il est prévu un dispositif de séparation des graines (12) central, destiné à séparer les graines à distribuer sortant de la trémie (3) séparée supplémentaire.

2. Semoir en lignes selon la revendication précédente, dans lequel le dispositif de séparation des graines (12) est intégré dans la trémie (3) séparée supplémentaire.

3. Semoir en lignes selon l'une quelconque des deux revendications précédentes, dans lequel le dispositif de séparation des graines (12) comporte un arbre de séparation, de préférence apte à être actionné, associé aux raccordements des conduites d'acheminement (11) à la trémie (3) séparée supplémentaire.

4. Semoir en lignes selon l'une quelconque des revendications précédentes, dans lequel vers au moins un élément de distribution (10) peut être acheminée uniquement la matière à distribuer sortant de la tête de distribution (7) et/ou le nombre d'éléments de distribution (10) reliés à la tête de distribution est supérieur au nombre d'éléments de distribution reliés à la trémie (3) séparée supplémentaire.

5. Semoir en lignes selon l'une quelconque des revendications précédentes, dans lequel sur la tête de distribution (7) est prévu un dispositif de verrouillage (13), commutable entre une position de verrouillage et une position de déverrouillage et destiné à verrouiller au moins une conduite de distribution (9) qui mène vers un élément de distribution non servi à partir de la trémie (3) séparée supplémentaire et/ou vers un élément de distribution non adjacent à un élément de distribution servi à partir de la trémie (3) supplémentaire.

6. Semoir en lignes selon la revendication précédente, dans lequel le dispositif de verrouillage (13) comporte des éléments de blocage (14), de préférence sous forme de clavettes de déviation, pouvant être déplacés vers l'intérieur de la tête de distribution (7) et pouvant être déplacés hors de la tête de distribution (7).

7. Semoir en lignes selon l'une quelconque des revendications précédentes, dans lequel les conduites d'acheminement (11), menant de la trémie (3) séparée supplémentaire vers les éléments de distribution (10) associés, et les conduites de distribution (9), menant de la tête de distribution (7) vers les éléments de distribution (10) associés, comportent des tronçons d'embouchure et/ou de distribution séparés, qui sont disposés sur des côtés opposés du même élément de distribution (10) ou sur des éléments de distribution différents, de préférence adjacents.

8. Semoir en lignes selon l'une quelconque des revendications précédentes, dans lequel un dispositif de transport pneumatique, destiné à transporter dans un flux d'air les matières à distribuer, est associé aux conduites d'acheminement (11) qui mènent de la trémie (7) supplémentaire vers les éléments de distribution (10) associés.

9. Semoir en lignes selon l'une quelconque des revendications précédentes, dans lequel ledit dispositif de transport (15) pneumatique ou un autre, destiné à transporter dans un flux d'air les matières à distribuer, est associé aux conduites de distribution (9) qui mènent de la tête de distribution (7) aux éléments de distribution (10) associés.

10. Semoir en lignes selon l'une quelconque des revendications précédentes, dans lequel la trémie (3) séparée supplémentaire est configurée sous forme de réservoir de graines de semis, de préférence pour des graines de semis de maïs, de tournesol et/ou de soja, et la trémie (2), reliée à la tête de distribution (7), est configurée sous forme de réservoir pour engrais, de préférence sous forme de réservoir pour engrais et semis de céréales.

11. Semoir en lignes selon l'une quelconque des revendications précédentes, dans lequel la trémie (3) séparée supplémentaire et la trémie (2) peuvent être reliées l'une à l'autre moyennant l'enlèvement et/ou le contournement d'une cloison, de telle sorte que pour semer des semences normales, telles que le blé ou l'avoine, la trémie supplémentaire des organes de séparation peut être utilisée, moyennant le contournement et/ou l'enlèvement des cloisons, pour distribuer les semences.
